Europäisches Patentamt

European Patent Office

Office européen des brevets

(11) Veröffentlichungsnummer: **0 506 162 A1**

## (12) EUROPÄISCHE PATENTANMELDUNG

(21) Anmeldenummer: **92200602.8**

(51) Int. Cl.5: **C04B 30/02**

(22) Anmeldetag: **02.03.92**

(30) Priorität: **27.03.91 DE 4109997**

(43) Veröffentlichungstag der Anmeldung:
**30.09.92 Patentblatt 92/40**

(84) Benannte Vertragsstaaten:
**AT DE ES FR GB IT SE**

(71) Anmelder: **METALLGESELLSCHAFT
Aktiengesellschaft
Reuterweg 14
W-6000 Frankurt am Main(DE)**

(72) Erfinder: **Neite, Günter, Dr.-Phys.
Martinusstrasse 9
W-6350 Bad Nauheim(DE)**

(54) Verfahren zur Herstellung eines Faserformkörpers.

(57) Bei einem aus Fasern oder Whiskern bestehenden Formkörper sind die Fasern durch einen aus Siliziumdioxid bestehenden Binder fest miteinander verbunden.

Zur Vereinfachung der Herstellung der Faserformkörper werden diese nach der Formung mit Silikonöl getränkt, auf eine Temperatur von > 100°C erwärmt und anschließend bei einer Temperatur von > 175°C gebrannt.

FIG.1

Die Erfindung betrifft ein Verfahren zur Herstellung eines aus Fasern bzw. Whiskern, vorzugsweise mit einem Verhältnis von Faserlänge zu Faserdurchmesser von 3 bis 1000, vorzugsweise 10 bis 100, bestehenden Faserformkörpers, dessen Fasern durch einen Binder aus Siliziumdioxid miteinander verbunden sind.

Um die physikalischen und technologischen Eigenschaften von Metallen, insbesondere von Aluminium und Magnesium sowie deren Legierungen, deutlich zu verbessern, ist es bekannt, Stoffverbunde zwischen aus hochfesten Fasern bestehenden Formkörpern und dem in den Formkörpern penetrierten Metall zu erzeugen. Für die Herstellung solcher Stoffverbunde ist insbesondere das Preßgießen geeignet. Durch den hohen Druck von bis zu 1000 bar und mehr lassen sich Formkörper aus Fasern leicht mit einer Metallschmelze penetrieren. Der Enddruck von bis zu 1000 bar bringt die Schmelze und die Fasern auf atomaren Abstand, so daß es zu der für eine gute Bindung von Fasern und metallischer Matrix notwendigen gesteuerten Reaktion kommen kann. Die Faserverstärkung von Metallen erfolgt im allgemeinen durch Faserformkörper, aufgebaut aus Glas-, Aluminiumoxid-, Siliziumcarbid-, Siliziumnitrid-, Mischoxid-, Kohlenstoffasern usw. Der Fasergehalt der Faserformkörper beträgt in der Regel 5 bis 35 Vol.%. Entsprechend der Mischungsregel ergibt sich durch die Faserverstärkung sowohl eine Erhöhung der Festigkeit als auch ein Anstieg im E-Modul. Ferner verbessert sich auch beachtlich die Schwingfestigkeit. Das spezifische Gewicht des Stoffverbundes ist nur unwesentlich höher als das des metallischen Matrixwerkstoffs, da die Fasern selbst als Leichtwerkstoffe anzusehen sind.

Da die Faserformkörper wegen des bei der Penetration mit metallischer Schmelze entstehenden hohen Gießdrucks leicht deformiert werden, ist es erforderlich, bei der Herstellung der Faserformkörper einen Binder einzubringen, der die Fasern beim Preßgießen fest zusammenhält. Das geschieht heute meist in der Weise, daß durch Zugabe von Stärke zu einer die Fasern und kolloidales Siliziumdioxid enthaltenden Suspension ein aus Fasern, kolloidalem Siliziumdioxid und Stärke bestehender Niederschlag ausgeflockt wird. Durch Absaugen des Wassers und Trocknen des Niederschlags wird ein "grüner" Faserformkörper gebildet, der Siliziumdioxid und Stärke als Binder enthält. Aus diesem Grünling wird die Stärke durch entsprechende Erwärmung ausgebrannt, so daß Siliziumdioxid als Binder in dem Faserformkörper verbleibt.

Da Stoffverbunde mit Faserformkörpern in ihren Herstellungskosten deutlich höher als die aus Standard-Werkstoffen sind, ist es Aufgabe der vorliegenden Erfindung, Faserformkörper, deren Fasern durch Siliziumdioxid fest miteinander verbunden sind, bereitzustellen, die auf vereinfachte Weise herstellbar sind.

Die Lösung dieser Aufgabe besteht darin, daß der Faserformkörper nach seiner Formgebung mit Silikonöl getränkt, anschließend auf eine Temperatur von > 100°C erwärmt und dann bei einer Temperatur von > 175°C gebrannt wird. Durch das Tränken mit Silikonöl werden die Fasern des Formkörpers so benetzt, daß sie mit einem dünnen Film aus Silikonöl beschichtet sind. Zur Entfernung des niedrigst-viskosen Anteils des Silikonöls (Viskosität < 1 mP•s) wird der Faserformkörper erwärmt. Der höher-viskose Rest des Silikonöls wird aus dem Faserformkörper ausgebrannt. Als festes Oxidationsprodukt bleibt Siliziumdioxid auf den Fasern zurück und "verklebt" diese zu einem festen Verbund, der der Verformungsgefahr beim Preßgießen widersteht.

Je nach Größe des Faserformkörpers ist es angebracht, daß dieser im Temperaturbereich von 125 bis 175°C 0,5 bis 2,5 h lang erwärmt wird.

Zur Oxidation des Silikonöls wird der Faserformkörper 1 bis 3 h bei einer Temperatur von 200 bis 500°C gebrannt.

Für die Herstellung des Faserformkörpers haben sich insbesondere niedrig-viskose Silikonöle mit einer Viskosität von 1,5 bis 5 mP•s als geeignet erwiesen.

Die Erfindung ist im folgenden anhand eines Ausführungsbeispiels näher erläutert.

In Wasser suspendierte Aluminiumoxidfasern mit einer Länge von 150 μm und einem Durchmesser von 3 μm werden zur Bildung eines Faserformkörpers abgesaugt. Dieser Faserformkörper wird zur Beseitigung der darin enthaltenen Restfeuchtigkeit 1 h lang bei 80°C erwärmt. Danach wird der Faserformkörper mit einem niedrig-viskosen Silikonöl getränkt. Nach einer einstündigen Trocknung des mit Silikonöl getränkten Faserformkörpers bei 150°C, bei der der niedrigst-viskose Anteil mit einer Viskosität von < 1 mP•s entfernt wird, wird der Faserformkörper ansteigend über 12 h bis auf 450°C erhitzt.

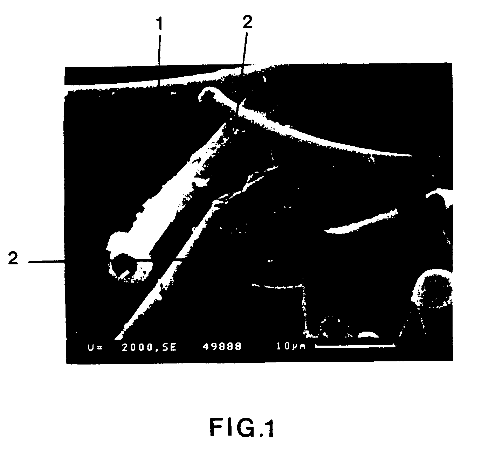

Die Fig. 1 zeigt ausschnittsweise eine rasterelektronenmikroskopische Aufnahme der Querbruchfläche durch den Faserformkörper, dessen Fasern (1) durch Siliziumdioxid an den Stellen (2) miteinander "verklebt" sind.

Der Faserformkörper wurde bei einem Gießdruck von 900 bar mit einer Aluminiumlegierung penetriert, ohne daß eine Deformation des Faserformkörpers erkennbar gewesen wäre.

**Patentansprüche**

1. Verfahren zur Herstellung eines aus Fasern bzw. Whiskern mit einem Verhältnis von Faserlänge zu Faserdurchmesser von 3 bis 1000, vorzugsweise 10 bis 100, bestehenden Formkörpers, dessen Fasern durch einen aus Siliziumdioxid bestehenden Binder fest miteinander verbunden sind, dadurch gekennzeichnet, daß der Faserformkörper mit Silikonöl getränkt, dann auf eine Temperatur von > 100°C erwärmt und anschließend bei einer Temperatur von > 175°C gebrannt wird.

2. Verfahren nach Anspruch 1, dadurch gekennzeichnet, daß der mit Silikonöl getränkte Faserformkörper auf 125 bis 175°C erwärmt und 0,5 bis 2 h lang bei dieser Temperatur gehalten wird.

3. Verfahren nach den Ansprüchen 1 und 2, dadurch gekennzeichnet, daß der Faserformkörper in einer Zeit von bis zu 15 h ansteigend bis auf eine Temperatur von 500°C erwärmt wird.

4. Verfahren nach den Ansprüchen 1 bis 3, dadurch gekennzeichnet, daß die Viskosität des Silikonöls 1,5 bis 5 mP•s beträgt.

FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-970 767 (SOCIETE DES USINES RHONE-POULENC) <br> * Spalte 1, Zeile 30 - Spalte 3, Zeile 56 * <br> * Spalte 4, Zeile 52 - Spalte 5, Zeile 14 * <br> * Beispiele 1-2 * <br> --- | 1-3 | C04B30/02 |
| X | US-A-4 828 774 (C.A. ANDERSSON ET AL) <br> * Zusammenfassung; Ansprüche 1,5,7,11,14 * <br> * Spalte 1, Absatz 51 - Spalte 2, Zeile 27 * <br> * Spalte 2, Zeile 51 - Spalte 3, Zeile 40; Beispiel 2 * <br> --- | 1 | |
| X | GB-A-833 800 (MIDLAND SILICONES LTD) <br> * Seite 1, Zeile 35 - Zeile 66; Ansprüche 1-2,5 * <br> * Seite 2, Zeile 105 - Seite 3, Zeile 38 * <br> * Seite 4, Zeile 4 - Zeile 28; Beispiel 1 * <br> --- | 1-2 | |
| A | DE-A-132 698 (SIEMENS & HALSKE AG) <br> * Spalte 2, Zeile 4 - Spalte 3, Zeile 3; Anspruch 1 * <br> --- | 1 | |
| A | EP-A-0 202 170 (RHONE-POULENC SPECIALITES CHIMIQUES) <br> * Zusammenfassung; Ansprüche 1-2,8,13-14 * <br> * Seite 1, Zeile 32 - Seite 2, Zeile 25 * <br> * Seite 5, Zeile 12 - Zeile 32 * <br> * Seite 9, Zeile 10 - Zeile 16 * <br> * Beispiele 2,15,19 * <br> ----- | 1,3-4 | **RECHERCHIERTE SACHGEBIETE (Int. Cl.5 )** <br><br> C04B |

Der vorliegende Recherchenbericht wurde für alle Patentansprüche erstellt

| Recherchenort | Abschlußdatum der Recherche | Prüfer |
|---|---|---|
| DEN HAAG | 01 JULI 1992 | OLSSON S.A. |

EPO FORM 1503 03.82 (P0403)